# EUROPÄISCHE PATENTSCHRIFT

(11) **EP 3 912 918 B1**
(45) Veröffentlichungstag und Bekanntmachung des Hinweises auf die Patenterteilung: **02.07.2025**
(21) Anmeldenummer: 20175582.4
(22) Anmeldetag: 20.05.2020
(51) Int. Cl.: B29C 65/02, B29C 65/18, B29C 65/30, B29C 65/74, B29C 65/78, B65B 61/02, B65B 61/26, B65B 9/20, B65B 9/22, B65B 51/14, B65B 5/10, B65B 51/30, B29C 59/02, B29C 65/00

(54) **VERPACKUNGSVORRICHTUNG FÜR KLEINSTÜCKGÜTER UND VERFAHREN ZUM HERSTELLEN EINES MEHRERE BLISTERBEUTEL UMFASSENDEN BLISTERSCHLAUCHES**
PACKAGING DEVICE FOR SMALL ITEMS AND METHOD FOR PRODUCING A BLISTER TUBE COMPRISING A PLURALITY OF BLISTER BAGS
DISPOSITIF D'EMBALLAGE POUR PETITES MARCHANDISES ET PROCÉDÉ DE FABRICATION D'UN TUBE BLISTER COMPRENANT PLUSIEURS SACS BLISTER

(43) Veröffentlichungstag der Anmeldung: 24.11.2021
(73) Patentinhaber: Becton Dickinson Rowa Germany GmbH, 53539 Kelberg (DE)
(72) Erfinder: SCHÜTTFORT, Torben, 56767 Sassen (DE)
(74) Vertreter: Zenz Patentanwälte Partnerschaft mbB

(56) Entgegenhaltungen:
- EP-A1- 1 740 466
- DE-U1- 202008 003 929
- JP-A- 2003 291 910
- US-A- 2 200 971
- US-A- 4 018 029

## Beschreibung

Die vorliegende Erfindung betrifft eine Verpackungsvorrichtung für Kleinstückgüter, insbesondere Arzneimittelportionen und Nahrungsmittelergänzungsportionen, die Verwendung der Verpackungsvorrichtung sowie ein Verfahren zum Herstellen eines mehrere Blisterbeutel umfassenden Blisterschlauches.

Vorrichtungen zum Verblistern von Arzneimittelportionen, auch Blisterautomaten gekannt, sind beispielsweise aus der WO 2013/034504 A1 bekannt. Die Vorrichtungen umfassen, je nach Ausbaustaufe, mehrere hundert Vorrats- und Abgabestationen, in welchen jeweils mehrere Arzneimittelportionen eines bestimmten Arzneimitteltyps gelagert sind. Auf Anforderung können einzelne Arzneimittelportionen von den Vorrats- und Abgabestationen abgegeben und über eine Führungseinrichtung einer Verpackungseinrichtung zugeführt werden, bei welcher die Arzneimittelportionen verpackt bzw. verblistert werden. Verpackungseinrichtungen zur Verwendung in den oben genannten Blisterautomaten sind beispielsweise aus der WO 2016/113291 A1 und der WO 2018/184795 A1 bekannt.

Mit den bei Blisterautomaten verwendeten Verpackungsvorrichtungen werden üblicherweise Blisterschläuche hergestellt, die mehrere Blisterbeutel umfassen. Zur Herstellung der Blisterbeutel bzw. Blisterschläuche wird eine Verpackungsmaterialbahn derart geformt, dass eine oder mehrere Arzneimittelportionen einem Aufnahmebereich zugeführt werden können. Nachdem die zu verblisternden Arzneimittelportionen dem Aufnahmebereich zugeführt sind, werden die einzelnen Blisterbeutel des Blisterschlauches durch Zusammenfügen der Verpackungsmaterialbahn an vorgegebenen Stellen fertiggestellt, wobei sich die Blisterbeutel strangartig über den Blisterschlauch erstrecken.

Die einzelnen Blisterbeutel enthalten patientenindividuell zusammengestellte Arzneimittelportionen und/oder Nahrungsmittelergänzungsportionen. Einem Patienten werden üblicherweise mehrere Blisterbeutel oder ein Abschnitt des Blisterschlauches bereitgestellt, und der Patient muss anhand der auf einem Blisterbeutel aufgedruckten Einnahmeinformationen erkennen, zu welchem Zeitpunkt eine in einem Blisterbeutel umfasste Arzneimittelzusammenstellung einzunehmen ist, beispielsweise morgens, mittags oder abends. Bei bekannten Verpackungsvorrichtungen werden die für den Patienten bestimmten Einnahmeinformationen vor dem Zusammenfügen des Blisterbeutels auf die Verpackungsmaterialbahn aufgedruckt. Aufgrund der geringen Größe der Blisterbeutel selbst sind auch die aufgedruckten für den Patienten bestimmten Einnahmeinformationen relativ klein gehalten, so dass das Erfassen, also Lesen, der Einnahmeinformationen einem Patienten mit einer Sehbeeinträchtigung schwer fallen kann oder ohne die Verwendung bestimmter Hilfsmittel unmöglich sein kann.

Aus der JP 2003 291910 A ist eine Form-Fill-Seal-Maschine bekannt, bei welcher Braille-Zeichen im Siegelbereich erzeugt werden können. Bei dieser Maschine wird aber ein "festes" Prägemittel verwendet, so dass alle Prägungen identisch sind. Eine gattungsgemäße Verpackungsmaschine ist zudem aus US 2 200 971 A bekannt.

Es ist Aufgabe der vorliegenden Erfindung, eine Verpackungsvorrichtung für Kleinstückgüter bereitzustellen, mit welcher Blisterbeutel herstellbar sind, deren Einnahmeinformationen auch von Patienten mit einer Sehbeeinträchtigung erfassbar sind. Ferner ist es Aufgabe der vorliegenden Erfindung, ein Verfahren zum Herstellen solcher Blisterbeutel bereitzustellen.

Die Aufgabe wird zum einen gelöst durch eine Verpackungsvorrichtung für Kleinstückgüter nach Patentanspruch 1. Im Rahmen der vorliegenden Erfindung sollen mit dem Begriff der Kleinstückgüter insbesondere Arzneimittelportionen und Nahrungsmittelergänzungsportionen in z. B. Tablettenform umfasst sein. Die Verpackungsvorrichtung kann aber auch genutzt werden, um andere Kleinstückgüter (beispielsweise Schrauben und dergleichen) zu verpacken.

Die erfindungsgemäße Verpackungsvorrichtung für Kleinstückgüter, mit welcher Blisterbeutel mit von Personen mit Sehbeeinträchtigungen wahrnehmbaren Einnahmeinformationen hergestellt werden können, umfasst eine Verpackungsmaterial-Führungseinrichtung zum Aufnehmen einer länglichen Verpackungsmaterialbahn, wobei die Verpackungsmaterial-Führungseinrichtung derart ausgebildet ist, dass die längliche Verpackungsmaterialbahn derart geformt wird, dass diese zur Aufnahme von Arzneimittelportionen geeignet ist (d. h. einen Aufnahmebereich für Kleinstückgüter aufweist) und in einer Laufrichtung weitergeführt wird. Wie genau die in die Verpackungsmaterial-Führungseinrichtung eintretende längliche Verpackungsmaterialbahn zum Aufnehmen von Kleinstückgütern geformt wird, ist abhängig von der Art und Weise, wie die zu verpackenden Kleinstückgüter zugeführt werden, wie die Laufrichtung der geformten Verpackungsmaterialbahn verläuft und ob die Verpackungsmaterialbahn beispielsweise schon vorgeformt ist. So ist es beispielsweise denkbar, dass das Verpackungsmaterial bereits in Längs- bzw. Laufrichtung gefaltet zugeführt wird.

Wenn die Verpackungsmaterialbahn beispielsweise nach der Formgebung senkrecht nach unten geführt wird, wie dies in der WO 2018/184795 A1 beschrieben ist, wird die Verpackungsmaterialbahn schlauchförmig geformt, wobei das untere Ende des schlauchförmigen Abschnittes durch einen Trennbereich zu einem vorlaufenden bereits geformten Blisterbeutel gebildet ist. In einem solchen Fall werden die Arzneimittelportionen (also die Kleinstückgüter) regelmäßig direkt von oben in den mit der Falt- und Führungseinrichtung gebildeten Aufnahmebereich geleitet. Wenn alternativ die Laufrichtung eher schräg verläuft, wie dies in der WO 2016/113291 A1 beschrieben ist, wird die Verpackungsmaterialbahn zu einer Art nach oben offenem Tetraeder geformt, welcher den Aufnahmebereich für die Arzneimittelportionen bildet. Die genaue bauliche Ausgestaltung der Verpackungsmaterial-Führungseinrichtung ist für die Erfindung nicht wesentlich, solange die oben beschriebene Funktion durch diese erfüllt wird.

Die erfindungsgemäße Verpackungsvorrichtung umfasst stromab der Verpackungsmaterial-Führungseinrichtung ferner eine Längs-Fügeeinrichtung, welche die Verpackungsmaterialbahn bei einem Verpackungsmaterial-Überlappungsbereich in Laufrichtung der Verpackungsmaterialbahn zusammenfügt. Dieser Verpackungsmaterial-Überlappungsbereich kann durch eine spezielle bauliche Ausgestaltung der Verpackungsmaterial-Führungseinrichtung vorgegeben sein.

Stromab der Verpackungsmaterial-Führungseinrichtung ist ferner eine Quer-Fügeeinrichtung angeordnet, welche die Verpackungsmaterialbahn in vorgegebenen Abständen (bezogen auf die Längsachse bzw. Laufrichtung der Verpackungsmaterialbahn), quer zur Laufrichtung zu einem Quer-Fügebereich zusammenfügt, wobei die Quer-Fügeeinrichtung zwei Fügemittel umfasst, von denen zumindest ein Fügemittel quer zur Laufrichtung bewegbar ist. Dieser Quer-Fügebereich kann dem oberen Trennabschnitt zwischen zwei Blisterbeuteln entsprechen. Dies ist dann der Fall, wenn der Blisterschlauch (wie es üblich ist) derart hergestellt wird, dass der Quer-Fügebereich zwei aufeinanderfolgenden Blisterbeuteln zugeordnet ist, zwischen denen innerhalb des Quer-Fügebereichs beispielsweise eine Perforation zum Abtrennen der einzelnen Blisterbeutel vorgesehen ist. Alternativ kann der Blisterschlauch auch so hergestellt werden, dass jedem Blisterbeutel zwei "eigene" Quer-Fügebereiche zugeordnet sind. Die Längs-Fügeeinrichtung und die Quer-Fügeeinrichtung können in Laufrichtung hintereinander als separate Bauteile angeordnet sein (wobei die Quer-Fügeeinrichtung regelmäßig stromab der Längsfügeeinrichtung angeordnet ist), es ist aber auch denkbar, dass beide Fügeeinrichtungen in einem gemeinsamen Fügebauteil angeordnet sind.

Die Verpackungsvorrichtung umfasst darüber hinaus erfindungsgemäß eine Mehrzahl von quer zur Längsrichtung einzeln, im laufenden Verpackungsbetrieb bewegbaren Prägemitteln und einen Prägemittel-Anschlagbereich, wobei die Prägemittel und der Prägemittel-Anschlagbereich derart zusammenwirken, dass mittels der Prägemittel ertastbare Erhebungen in dem Quer-Fügebereich ausbildbar sind.

Indem in dem Quer-Fügebereich ertastbare Erhebungen ausgebildet werden, ist es auch für einen Patienten mit einer Sehbeeinträchtigung möglich, mehrere Blisterbeutel zu unterscheiden. Wenn einem Patienten beispielsweise pro Tag drei Blisterbeutel bereitgestellt werden, ist es bei der Verwendung von zwei Prägestiften möglich, die drei Blisterbeutel derart durch ein Muster zu markieren, dass diese von dem Patienten zweifelsfrei einem Einnahmezeitpunkt zugeordnet werden können. Die erfindungsgemäße Verpackungseinrichtung ermöglicht es somit, Blisterbeutel bereitzustellen, die auch von einem Patienten mit einer Sehbeeinträchtigung eindeutig einem vorgegebenen Einnahmezeitpunkt zuordenbar sind.

Wie genau die Prägemittel in der Verpackungsvorrichtung realisiert werden, ist für die vorliegende Erfindung nicht wesentlich, solange sichergestellt ist, dass die ertastbaren Erhebungen in den Quer-Fügebereich eingebracht werden. So ist es beispielsweise denkbar, stromab der Fügeeinrichtungen eine weitere Einrichtung bereitzustellen, die die Prägemittel umfasst und mittels welcher die ertastbaren Erhebungen in die Quer-Fügebereiche eingebracht werden. Um jedoch die Verwendung einer separaten Einrichtung für das Führen der Prägemittel zu vermeiden, ist es bei einer bevorzugten Ausführungsform der erfindungsgemäßen Verpackungsvorrichtung vorgesehen, dass die Prägemittel in einem der Fügemittel ein- und ausfahrbar angeordnet sind und dass das andere Fügemittel zumindest in einem Kontaktbereich eine elastisch ausgebildete Fügeoberfläche oder eine Mehrzahl von quer zur Laufrichtung einzeln bewegbaren Prägemittelaufnahmen aufweist. Bei dieser bevorzugten Ausführungsform werden die ertastbaren Erhebungen also zeitgleich mit dem Herstellen des Quer-Fügebereiches erzeugt, so dass es nicht notwendig ist, mit einer separaten Einrichtung die ertastbaren Erhebungen nach dem Erstellen des Quer-Fügebereiches einzubringen, was die Komplexität und die Baulänge (in Laufrichtung) der Verpackungsvorrichtung vermindert bzw. gering hält.

Bereits bei der Verwendung von zwei Prägemitteln ist es möglich, die Blisterbeutel derart eindeutig zu kennzeichnen, dass ein Patient vier unterschiedliche Blisterbeutel unterscheiden kann, womit es auch einem Patienten mit einer Sehbeeinträchtigung möglich ist, die Blisterbeutel eines Tagesbedarfes ohne Hilfe unterscheiden zu können. Um eine größere Vielzahl von Blisterbeuteln eindeutig voneinander zu unterscheiden und das Ermitteln der durch die Erhebungen aufgebrachten Informationen zu vereinfachen, ist es bei einer bevorzugten Ausführungsform der erfindungsgemäßen Verpackungsvorrichtung vorgesehen, dass die Prägemittel als zumindest eine 2*3-Matrix (waagerecht, senkrecht) aus Prägestiften ausgebildet sind, so dass mittels der Prägestifte pro Matrix ein Punktmuster in Form eines Braille-Zeichens erzeugbar ist. Bereits bei Verwendung von lediglich einer Matrix können 64 verschiedene Muster dargestellt werden, so dass in einem solchen Fall Blisterbeutel für beispielsweise eine ganze Woche eindeutig voneinander unterscheidbar sind. Bei Verwendung von größeren und/oder mehreren Matrizen ist es demnach möglich, eine Vielzahl von Daten in den Quer-Fügebereich einzuprägen.

Das Zusammenfügen der Blisterbeutel aus der langgestreckten Verpackungsmaterialbahn kann auf unterschiedliche Art und Weise stattfinden. Beispielsweise können bestimmte Bereiche vor dem Zusammenfügen mit einem Klebstoff versehen werden. Bei einer bevorzugten Ausführungsform ist es jedoch vorgesehen, dass zumindest eine Fügeoberfläche eines Fügemittels erhitzbar ist, so dass das Zusammenfügen als ein Verschweißen des Verpackungsmaterials stattfindet.

Wie bereits oben angedeutet, kann die Verpackungsmaterial-Führungseinrichtung in Abhängigkeit von der Gesamtkonstruktion der Verpackungsvorrichtung unterschiedlich ausgeführt sein. Bei einer bevorzugten Ausführungsform umfasst die Verpackungsmaterial-Führungseinrichtung eine zentrale Durchgangsöffnung und ist derart ausgebildet, dass die längliche Verpackungsmaterialbahn der Durchgangsöffnung zugeführt wird, welche derart ausgeführt ist, dass die längliche Verpackungsmaterialbahn in Laufrichtung zu einer von der Durchgangsöffnung definierten schlauchförmigen Verpackungsmaterialbahn mit einem Verpackungsmaterialbahn-Überlappungs-Bereich geformt wird, wobei sich innerhalb eines Abschnittes der schlauchförmigen Verpackungsmaterialbahn ein Führungsabschnitt einer Leiteinrichtung für Arzneimittelportionen erstreckt, welcher in dem Abgabebereich der schlauchförmigen Verpackungsmaterialbahn endet. Um bei einer schlauchförmig geformten Verpackungsmaterialbahn zu gewährleisten, dass die Quer-Zusammenfügung mittels der Quer-Fügeeinrichtung ohne Überlappung der Verpackungsmaterialbahn in dem Quer-Fügebereich fehlerfrei gelingt, ist es bei dieser bevorzugten Ausführungsform vorgesehen, dass im unteren Bereich des Führungsabschnittes mehrere Spreizmittel angeordnet sind, die die schlauchförmige Verpackungsmaterialbahn zum Zusammenfügen durch die Quer-Fügeeinrichtung entsprechend der Ausrichtung der Fügemittel aufspreizen. Mit anderen Worten, die Spreizmittel sorgen dafür, dass die schlauchförmige Verpackungsmaterialbahn vor dem Zusammenfügen an die Ausrichtung der Fügemittel angepasst wird, d. h. aus der kreisförmigen Form in eine langgestreckte Form überführt wird, die mittels der Quer-Fügeeinrichtung besser zusammengefügt werden kann.

Die Anmeldung betrifft ferner die Verwendung einer erfindungsgemäßen Verpackungsvorrichtung zum Herstellen eines mehrere Blisterbeutel umfassenden Blisterschlauches.

Die Aufgabe der vorliegenden Erfindung wird ferner gelöst durch ein Verfahren gemäß Patentanspruch 7. Bei dem erfindungsgemäßen Verfahren zum Herstellen eines mehrere Blisterbeutel umfassenden Blisterschlauches wird zunächst eine längliche Verpackungsmaterialbahn bereitgestellt, die dann mit einer Verpackungsmaterial-Führungseinrichtung zur Aufnahme von Arzneimittelportionen zu einem Aufnahmebereich geformt wird. Wie genau diese Formung durchgeführt wird, ist abhängig von der genauen Ausgestaltung der Verpackungsmaterial-Führungseinrichtung, der Laufrichtung der Verpackungsmaterialbahn sowie der genauen Ausgestaltung des Verpackungsmaterials (siehe dazu weiter oben). Nach der Formung zur Aufnahme von Kleinstückgütern werden Kleinstückgüter dem Aufnahmebereich zugeführt und die Verpackungsmaterialbahn mit einer Längs-Fügeeinrichtung bei einem Verpackungsmaterial-Überlappungsbereich in Laufrichtung der Verpackungsmaterialbahn zu einer schlauchförmigen Verpackungsmaterialbahn zusammengefügt, wobei das Zusammenfügen und das Zuführen von Kleinstückgütern auch zeitgleich oder in umgekehrter Reihenfolge erfolgen kann. Mit der Quer-Fügeeinrichtung wird die schlauchförmige Verpackungsmaterialbahn in vorgegebenen Abständen, bezogen auf die Laufrichtung bzw. Längsachse der Verpackungsmaterialbahn, in einem Quer-Fügebereich zusammengefügt, wobei dies auch zeitgleich mit dem Zusammenfügen in Längsrichtung stattfinden kann. Erfindungsgemäß wird in den Quer-Fügebereich mittels einer Mehrzahl von quer zur Laufrichtung einzeln, im laufenden Herstellungsbetrieb der Blisterbeutel bewegbaren Prägemitteln ein ertastbares Muster eingeprägt.

Bei einer bevorzugten Ausführungsform des erfindungsgemäßen Verfahrens sind die Prägemittel als zumindest eine 2*3-Matrix aus Prägestiften ausgebildet, so dass mittels der Prägestifte pro Matrix ein Punktmuster in Form eines Braille-Zeichens in den Quer-Fügebereich eingeprägt werden kann. Auf diese Weise kann eine Vielzahl von Informationen mittels ertastbaren Zeichen eingebracht werden, die einem Großteil von Patienten mit Sehbeeinträchtigung bekannt sind.

Um das Zusammenfügen der vorgeformten Verpackungsmaterialbahn mit der Quer-Fügeeinrichtung zu unterstützen und die Wahrscheinlichkeit von Fügefehlern zu vermindern, ist es bei einer bevorzugten Ausführungsform des Verfahrens vorgesehen, dass die schlauchförmige Verpackungsmaterialbahn vor dem Zusammenfügen durch mehrere Spreizmittel aufgespreizt wird.

Im Nachfolgenden wird eine bevorzugte Ausführungsform der erfindungsgemäßen Verpackungsvorrichtung sowie des erfindungsgemäßen Verfahrens unter Bezugnahme auf die Zeichnung beschrieben, in welcher
Figuren 1a und 1b Schrägansichten der bevorzugten Ausführungsform zeigen, wobei in Figur 1a die Verpackungsmaterialbahn fortgelassen ist,
Figuren 2a und 2b Detailansichten der Längs- und Quer-Fügeeinrichtungen zeigen, wobei bei Figur 2b die Verpackungsmaterialbahn fortgelassen ist,
Figuren 3a und 3b Detailansichten der Falt- und Fügeeinrichtung zeigen, wobei bei Figur 3b die Verpackungsmaterialbahn fortgelassen ist,
Figuren 4a und 4b Detailansichten der Quer-Fügeeinrichtung zeigen,
Figuren 5a und 5b Schnittansichten der Quer-Fügeeinrichtung zeigen,
Figuren 6a und 6b Detailansichten eines Fügemittels zeigen, und
Figur 7 ein Ablaufschema einer bevorzugten Ausführungsform des erfindungsgemäßen Verfahrens zeigt.

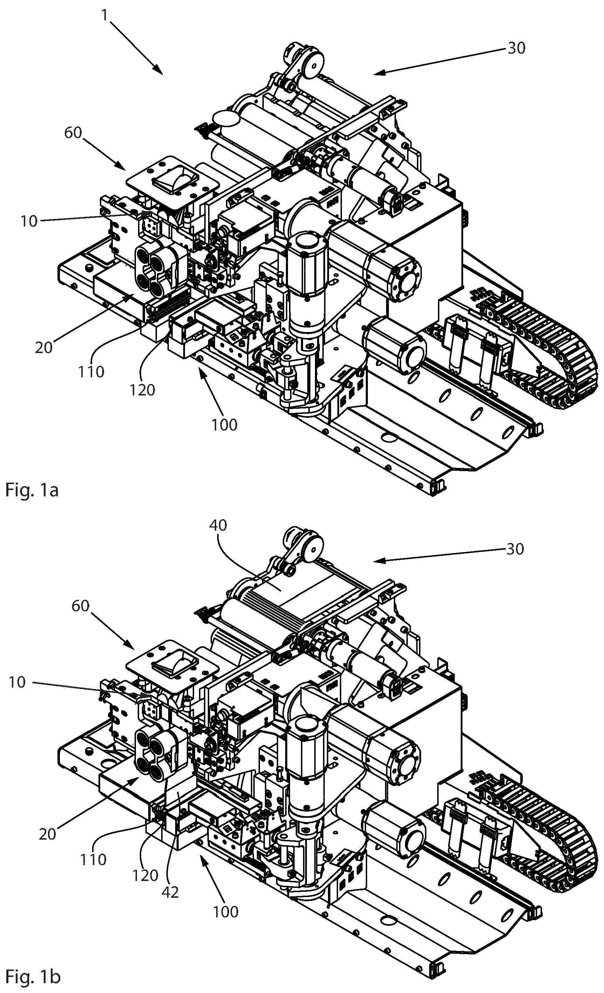

Bei den nachfolgend beschriebenen Ausführungsformen wird eine speziell ausgebildete Verpackungsmaterial-Führungseinrichtung beschrieben, die für eine nicht vorgeformte (vorgefaltete) Verpackungsmaterialbahn geeignet ist. Bei der nachfolgenden detaillierten Beschreibung sind Arzneimittelportionen als Kleinstückgüter vorgesehen. Figuren 1a und 1b zeigen Schrägansichten einer bevorzugten Ausführungsform der erfindungsgemäßen Verpackungsvorrichtung 1, wobei bei Figur 1a eine durch die Verpackungsvorrichtung geführte Verpackungsmaterialbahn 40 fortgelassen ist, um die darunter befindlichen Bauteile zu veranschaulichen. Bei der nachfolgend beschriebenen bevorzugten Ausführungsform der Verpackungsvorrichtung wird ein Blisterschlauch hergestellt, bei dem sich zwei aufeinanderfolgende Blisterbeutel einen Quer-Fügebereich "teilen". Dies bedingt, dass die Prägemittel entsprechend angeordnet sind, und zwar entweder so, dass die Muster nur in einem Abschnitt des Quer-Fügebereichs erstellt werden, wobei dieser Abschnitt einem Blisterbeutel zugeordnet ist. Alternativ können die Prägemittel so angeordnet sein, dass in beiden Abschnitten des Quer-Fügebereichs Muster geprägt werden, die dann jeweils einem Blisterbeutel zugeordnet sind.

Die gezeigte Ausführungsform der Verpackungsvorrichtung umfasst eine Verpackungsmaterial-Zuführung 30, mittels welcher die längliche Verpackungsmaterialbahn 40 über eine Mehrzahl von Rollen einer Verpackungsmaterial-Führungseinrichtung 10 zugeführt wird, wobei der Laufweg der Verpackungsmaterialbahn in Figur 1b lediglich abschnittsweise gezeigt ist. Über der Verpackungsmaterial-Führungseinrichtung 10, die in nachfolgenden Figuren detaillierter beschrieben ist, ist eine Leiteinrichtung 60 angeordnet, mittels welcher bereitgestellte Arzneimittelportionen einem Aufnahmebereich für Arzneimittelportionen, welcher durch einen geformten Bereich der Verpackungsmaterialbahn gebildet ist, zugeführt werden. Von der Verpackungsmaterial-Führungseinrichtung 10 wird bei der bevorzugten Ausführungsform der gezeigten Verpackungsvorrichtung die geformte Verpackungsmaterialbahn senkrecht nach unten geführt, wie dies in nachfolgenden Figuren detaillierter zu erkennen ist. Durch die senkrechte Führung der Verpackungsmaterialbahn ist deren Laufrichtung "nach unten" festgelegt. Bei abweichenden Ausführungen der Leiteinrichtung sowie der Verpackungsmaterial-Führungseinrichtung kann die Laufrichtung auch abweichend sein, beispielsweise ist es denkbar, dass die Laufrichtung schräg verläuft, wobei in einem solchen Fall der Aufnahmebereich für die Arzneimittelportionen anders geformt ist (siehe dazu im Detail auch WO 2016/113291 A1 und WO 2018/184795 A1).

Stromab der Verpackungsmaterial-Führungseinrichtung 10 ist eine Längs-Fügeeinrichtung 20 angeordnet, mit welcher ein sich in Laufrichtung erstreckender Überlappungsbereich 41 der geformten Verpackungsmaterialbahn 43 zusammengefügt wird, wie dies unter Bezugnahme auf nachfolgende Figuren detaillierter beschrieben ist.

Stromab dieser Längs-Fügeeinrichtung 20 ist eine Quer-Fügeeinrichtung 100 angeordnet, die zwei Fügemittel 110, 120 umfasst, wobei bei der gezeigten Ausführungsform das Fügemittel 120 quer bzw. orthogonal zu der Laufrichtung der Verpackungsmaterialbahn bewegbar ist, wie dies bereits in Figur 1b angedeutet ist, in welcher die beiden Fügemittel 110, 120 zum Herstellen eines Quer-Fügebereiches 42 der Verpackungsmaterialbahn 40 zusammengeführt sind. Die vorgenannten Einrichtungen der erfindungsgemäßen Verpackungsvorrichtung umfassen eine Mehrzahl von Antrieben, wie in den Figuren 1a und 1b teilweise zu erkennen ist, deren genaue Funktionsweise und Anordnung innerhalb der Verpackungsvorrichtung aber für die Erfindung unwesentlich sind. Es handelt sich regelmäßig um Drehmotoren, deren Funktionsweise hier nicht näher beschrieben werden muss.

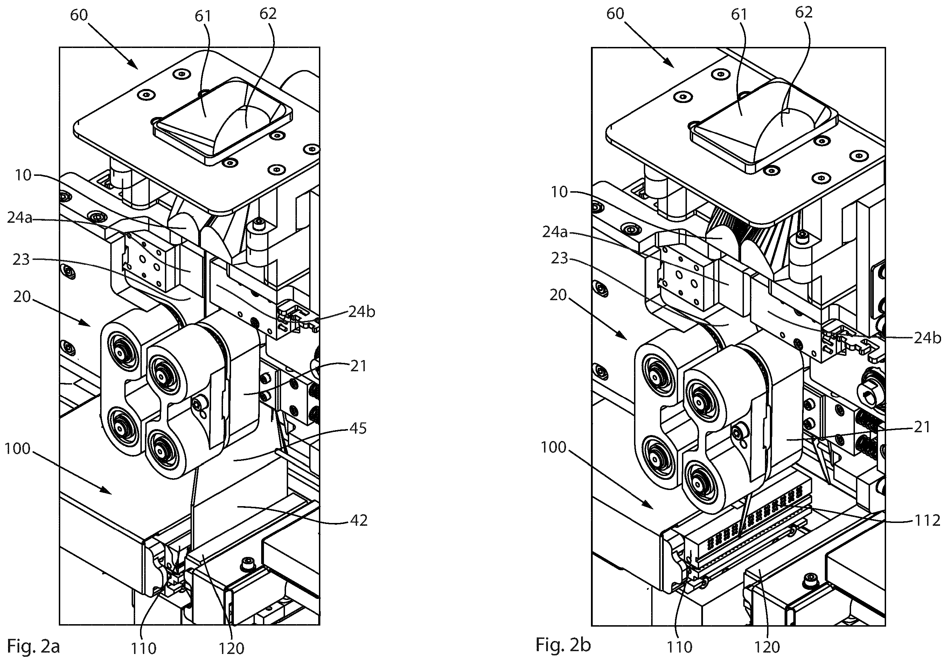

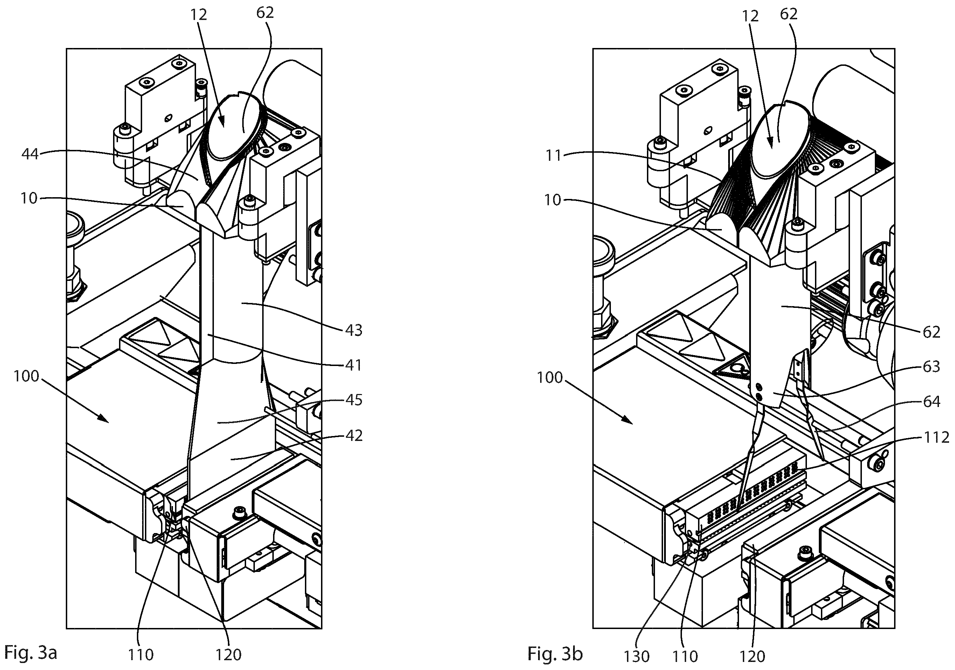

Figuren 2a und 2b zeigen Detailansichten der ersten Ausführungsform, und zwar insbesondere die Leiteinrichtung 60, die Verpackungsmaterial-Führungseinrichtung 10, die Längs-Fügeeinrichtung 20 sowie die Quer-Fügeeinrichtung 100. Über der in den Figuren 2a und 2b lediglich angedeuteten Verpackungsmaterial-Führungseinrichtung 10 ist eine Leiteinrichtung 60 angeordnet, die einen trichterförmigen Aufnahmebereich 61 zur Aufnahme von Arzneimittelportionen umfasst. Der Aufnahmebereich 61 leitet die Arzneimittelportionen in einen Führungsabschnitt 62, mit welchem die Arzneimittelportionen in einen Aufnahmebereich 45 der geformten Verpackungsmaterialbahn 43 geführt werden, wie dies unter Bezugnahme auf Figuren 3a und 3b detaillierter beschrieben ist. Stromab (bezogen auf die Laufrichtung der Verpackungsmaterialbahn) der Verpackungsmaterial-Führungseinrichtung 10 ist die Längs-Fügeeinrichtung 20 angeordnet. Diese umfasst im Wesentlichen zwei Baugruppen, nämlich eine zwei Schweißbacken 24a, 24b aufweisende Verbindungsbaugruppe sowie eine stromab dieser Verbindungsbaugruppe angeordnete Bewegungsbaugruppe, welche den durch die Schweißbacken zusammengefügten Überlappungsbereich mittels der Bandantriebe 21, 23 in Laufrichtung "nach unten auf" fortbewegt. Bei alternativen Ausführungsformen ist es denkbar, dass anstatt der Schweißbacken 24a, 24b der Überlappungsbereich vor dem Zusammenfügen beispielsweise mit einem Klebstoff beaufschlagt wird, und dieser Bereich im Anschluss daran lediglich zusammengepresst wird und keine Verschweißung mittels Hitze stattfindet. Stromab der Längs-Fügeeinrichtung 20 ist die Quer-Fügeeinrichtung 100 angeordnet, mittels welcher die bereits in Längsrichtung verschweißte Verpackungsmaterialbahn in Querrichtung zusammengefügt wird, wodurch ein (hier übertrieben groß dargestellter) Quer-Fügebereich 42 entsteht.

Figuren 3a und 3b zeigen weitere Detailansichten, wobei bei diesen die Leiteinrichtung 60 teilweise und die Längs-Fügeeinrichtung 20 vollständig fortgelassen sind. Darüber hinaus ist bei Figur 3b die Verpackungsmaterialbahn fortgelassen. In Figur 3a ist insbesondere der Lauf und die Formgebung der Verpackungsmaterialbahn innerhalb der erfindungsgemäßen Verpackungsvorrichtung zu erkennen. Von der (nicht dargestellten) Verpackungsmaterial-Zuführung gelangt die längliche Verpackungsmaterialbahn auf einen (in Figur 3b zu erkennenden) Aufnahmebereich 11 der Verpackungsmaterial-Führungseinrichtung 10, die eine zentrale Durchgangsöffnung 12 aufweist, hin zu welcher die Verpackungsmaterialbahn geformt wird. Dazu ist die Verpackungsmaterial-Führungseinrichtung 10 bei der gezeigten Ausführungsform schulter- bzw. kragenförmig mit der zentralen Durchgangsöffnung ausgebildet. Aufgrund der genauen Ausgestaltung der Verpackungsmaterial-Führungseinrichtung 10 wird die längliche Verpackungsmaterialbahn über den schulterförmigen Aufnahmebereich 11 zu einer schlauchförmigen Verpackungsmaterialbahn 43 mit einem Verpackungsmaterial-Überlappungsbereich 41 geformt. In Figur 3a ist zu erkennen, dass die Verpackungsmaterialbahn im Bereich des Aufnahmebereichs 11 über diesen geführt wird und entsprechend geformt wird (Bezugszeichen 44 zeigt die auf dem Aufnahmebereich 11 aufliegende Verpackungsmaterialbahn).

Der Verpackungsmaterial-Überlappungsbereich 41 wird von den in den Figuren 2a und 2b dargestellten Schweißbacken 24a, 24b zunächst verschweißt und anschließend durch die Fördermittel 21, 23 in Laufrichtung (das heißt bei der gezeigten Ausführungsform nach unten) weiterbewegt. Um zu gewährleisten, dass die durch die Verpackungsmaterial-Führungseinrichtung mit ihrer zentralen Durchgangsöffnung 12 vorgegebene Form der Verpackungsmaterialbahn, nämlich schlauchförmig, beibehalten wird, ist zur Unterstützung durch diesen Bereich der Führungsabschnitt 62 der Leiteinrichtung geführt. In Figur 3b ist die genaue Anordnung dieses Führungsabschnittes 62 zu erkennen. Anhand eines Vergleiches der Figuren 3a und 3b ist ebenfalls zu erkennen, dass die Verpackungsmaterialbahn im Bereich der Verpackungsmaterial-Führungseinrichtung durch einen Spalt zwischen Führungsabschnitt 62 und der Wandung der Durchgangsöffnung 12 geführt ist. Im Anschluss daran wird die schlauchförmige Verpackungsmaterialbahn außen an dem Führungsabschnitt 62 weitergeführt.

Wie dies in den Figuren 3a und 3b zu erkennen ist, wird die schlauchförmige Verpackungsmaterialbahn durch Spreizmittel 64, die im unteren Bereich des Führungsabschnittes 62 befestigt sind, zu dem Aufnahmebereich 45 aufgespreizt. In diesen Aufnahmebereich 45 gelangen die zu verblisternden Arzneimittelportionen. Aufgrund des bereits eingebrachten Quer-Fügebereiches des vorlaufenden Blisterbeutels ist der Aufnahmebereich 45 auch nach unten abgeschlossen. Zwar ist die Verwendung der Spreizmittel 64 nicht zwingend erforderlich, jedoch gewährleistet deren Verwendung eine fehlerfreie und optisch ansprechende Zusammenfügung des Quer-Fügebereiches 42.

Im Hinblick auf eine mögliche Ausgestaltung der Verpackungsmaterial-Führungseinrichtung sowie der Leiteinrichtung und der Längs-Fügeeinrichtung wird noch Bezug genommen auf die Anmeldung WO 2018/184795 A1, deren für die vorgenannten Einrichtungen relevanter Offenbarungsgehalt hiermit in diese Anmeldung aufgenommen wird.

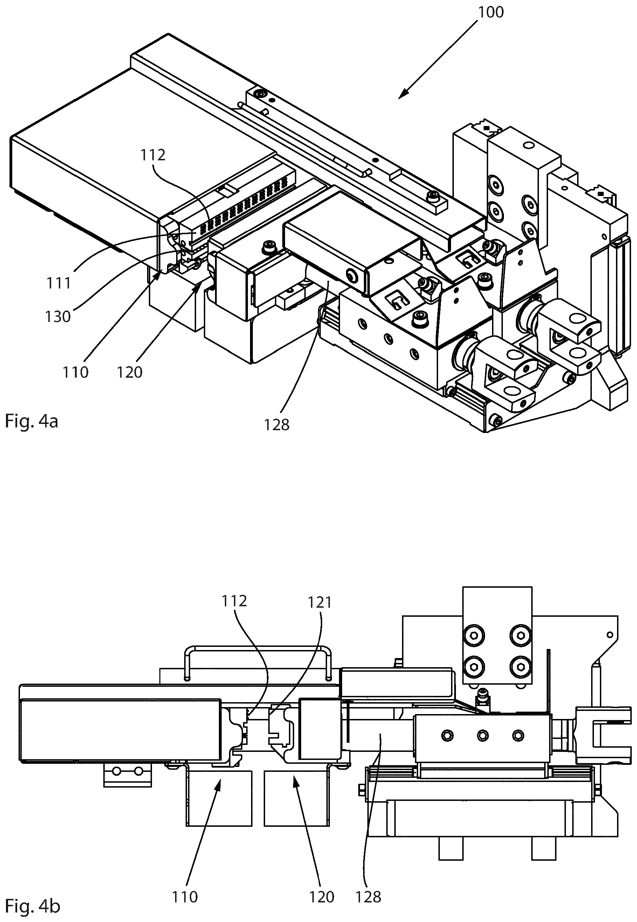

Figuren 4a und 4b zeigen Detailansichten der Quer-Fügeeinrichtung 100 mit den beiden Fügemitteln 110 und 120. Bei Figur 4a ist zu erkennen, dass bei der hier gezeigten bevorzugten Ausführungsform der erfindungsgemäßen Verpackungsvorrichtung die Prägemittel 112 in dem Fügemittel 110 angeordnet sind, und zwar derart, dass die als Prägestifte ausgebildeten Prägemittel in Bezug auf eine Oberfläche 111 des Fügemittels 110 aus- und einfahrbar sind. Bei der hier gezeigten Ausführungsform ist lediglich das Fügemittel 120 horizontal, also quer bzw. orthogonal zur Laufrichtung der Verpackungsmaterialbahn, bewegbar, wozu bei der gezeigten Ausführungsform eine lediglich angedeutete Horizontalbewegungseinrichtung 128 vorgesehen ist, deren genauere Funktionsweise hier nicht relevant ist.

Damit mit den ein- und ausfahrbaren Prägestiften 112 ein ertastbares Muster in den Quer-Fügebereich eingebracht werden kann, ist es notwendig, dass diese mit einem elastisch ausgebildeten Anschlagbereich zusammenwirken, der in dem Fügemittel 120 ausgebildet ist, was anhand der Figuren jedoch optisch nicht zu erkennen ist.

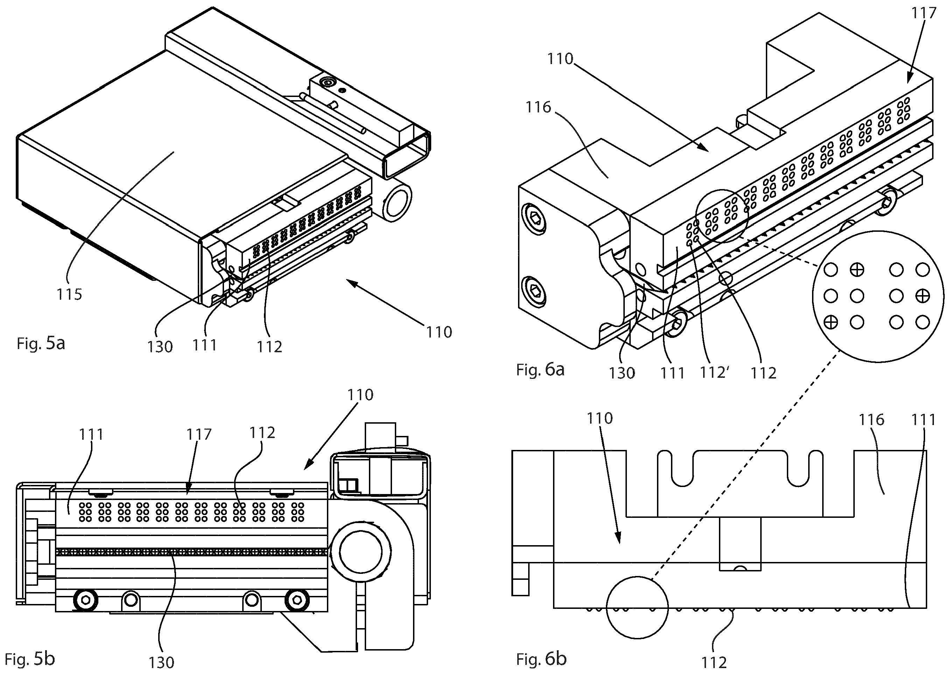

Figuren 5a und 5b zeigen Detailansichten des Fügemittels 110, welches in einer über eine (in Figur 6a gezeigte) Halterung 116 an bzw. in einem Fügemittel-Gehäuse 115 angeordnet ist. Wie dies insbesondere in Figur 5b zu erkennen ist, sind bei der gezeigten Ausführungsform die Prägemittel 112 als zwölf 2*3-Matrizen 117 ausgebildet, so dass mit dem gezeigten Fügemittel 110 zwölf Braille-Zeichen in den Quer-Fügebereich eingebracht werden können. Um die Trennung der einzelnen Blisterbeutel zu vereinfachen, ist unterhalb des Fügemittels 120 ein Trennmittel 130 vorgesehen, welches horizontal, also quer bzw. orthogonal zur Laufrichtung des Verpackungsmaterialbandes, bewegbar ist und eine Perforierung in den Quer-Fügebereich einbringen kann oder diesen vollständig durchtrennen kann.

Figuren 6a und 6b zeigen Detailansichten des Fügemittels 110, und bei den Figuren 6a und 6b ist ansatzweise zu erkennen, dass die einzelnen, als Prägestifte ausgebildeten Prägemittel 112 einzeln bewegbar ein- und ausfahrbar sind. Bei den Figuren 6a und 6b ist die gleiche Stellung der Prägestifte veranschaulicht, und anhand der Detailaufnahme sind zwei 2*3-Matrizen hervorgehoben, wobei bei der linken hervorgehobenen Matrix der untere Prägestift der ersten Spalte und der obere Prägestift der zweiten Spalte ausgefahren sind, wohingegen bei der zweiten Matrix lediglich der mittlere Prägestift der zweiten Spalte ausgefahren ist. Wie genau die einzelnen Prägestifte bewegt werden, ist für die vorliegende Erfindung nicht wesentlich und dem Fachmann bekannt, beispielsweise aus üblichen Vorrichtungen zum Schreiben in Braille-Schrift.

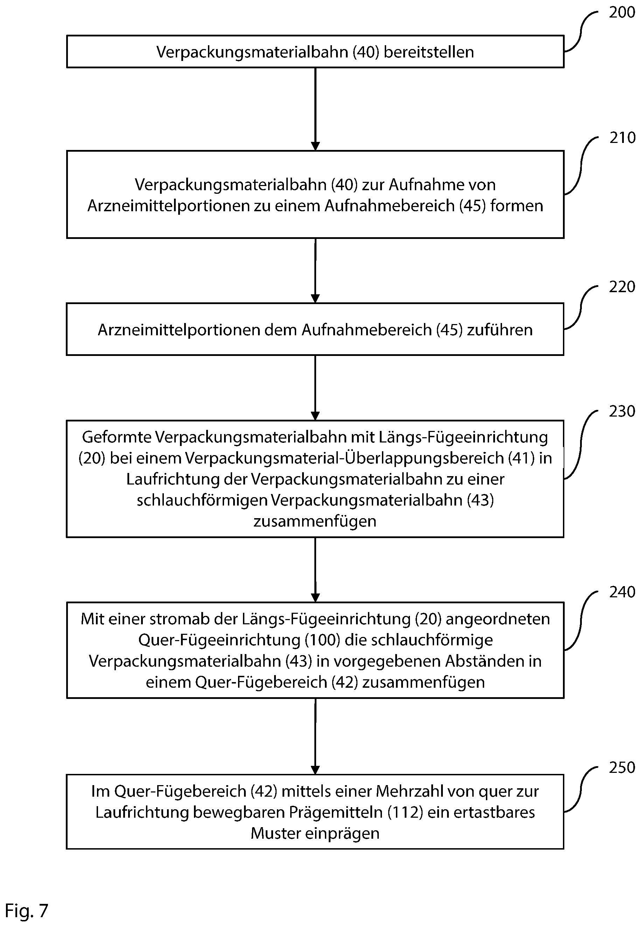

Figur 7 zeigt ein Ablaufschema einer bevorzugten Ausführungsform des erfindungsgemäßen Verfahrens. Bei der nachfolgend beschriebenen bevorzugten Ausführungsform des Verfahrens wird ein Blisterschlauch hergestellt, bei dem sich zwei aufeinanderfolgende Blisterbeutel einen Quer-Fügebereich "teilen". Dies bedingt, dass die Prägemittel entsprechend angeordnet sind, und zwar entweder so, dass die Muster nur in einem Abschnitt des Quer-Fügebereichs erstellt werden, wobei dieser Abschnitt einem Blisterbeutel zugeordnet ist. Alternativ können die Prägemittel so angeordnet sein, dass in beiden Abschnitten des Quer-Fügebereichs Muster geprägt werden kann, die dann jeweils einem Blisterbeutel zugeordnet sind.

Zunächst wird in einem Schritt 200 eine Verpackungsmaterialbahn 40 bereitgestellt, welche in einem Schritt 210 zur Aufnahme von Arzneimittelportionen zu einem Aufnahmebereich 45 geformt wird. Dies geschieht beispielsweise mit der in den vorherigen Figuren beschriebenen Verpackungsmaterial-Führungseinrichtung 10. Nach dem Ausbilden des Aufnahmebereiches 45 werden diesem in einem Schritt 220 die zu verblisternden Arzneimittelportionen zugeführt. In einem Schritt 230 wird die geformte Verpackungsmaterialbahn 43 mit der Längs-Fügeeinrichtung 20 bei einem Verpackungsmaterial-Überlappungsbereich 41 in Laufrichtung der Verpackungsmaterialbahn zu einer schlauchförmigen Verpackungsmaterialbahn 43 zusammengefügt (beispielsweise verschweißt). In einem nachfolgenden Schritt 240 wird mit einer stromab der Längs-Fügeeinrichtung 20 angeordneten Quer-Fügeeinrichtung 100 die schlauchförmige Verpackungsmaterialbahn 43 in vorgegebenen Abständen in einem bzw. zu einem Quer-Fügebereich 42 zusammengefügt. Bei Betrachtung in Laufrichtung ist dieser Quer-Fügebereich der Abschluss des gerade bearbeiteten Blisterbeutels und gleichzeitig das "untere" Ende eines neuen nachfolgenden Blisterbeutels, wobei der Quer-Fügebereich einen Abschnitt des Aufnahmebereichs des nachfolgenden Blisterbeutels bildet. Erfindungsgemäß wird in Schritt 250 im Quer-Fügebereich 42 mittels einer Mehrzahl von quer zur Laufrichtung bewegbaren Prägemitteln 112 ein ertastbares Muster eingeprägt, wobei die Anordnung in dem Quer-Fügebereich derart ist, dass die Muster einem oder beiden Blisterbeutel/-n zugeordnet sind. Bei der hier beschriebenen Ausführungsform der Vorrichtung und des Verfahrens ist das Muster lediglich einem Blisterbeutel zugeordnet; bei Verwendung von Fügemitteln mit komplexeren Prägemitteln können in den Quer-Fügebereich auch Muster für beide Blisterbeutel eingeprägt werden, die sich den Quer-Fügebereich "teilen" (als oberen bzw. unteren Abschluss der Blisterbeutel, regelmäßig getrennt durch eine mit einem Trennmittel 130 eingebrachte Perforation).

## Patentansprüche

1. Verpackungsvorrichtung (1) für Kleinstückgüter, aufweisend:
eine Verpackungsmaterial-Führungseinrichtung (10) zum Aufnehmen einer länglichen Verpackungsmaterialbahn (40), wobei die Verpackungsmaterial-Führungseinrichtung (10) derart ausgebildet ist, dass die längliche Verpackungsmaterialbahn (40) derart geformt wird, dass diese zur Aufnahme von Kleinstückgütern geeignet ist und in einer Laufrichtung weitergeführt wird,
eine stromab der Verpackungsmaterial-Führungseinrichtung (10) angeordnete Längs-Fügeeinrichtung (20), welche die geformte Verpackungsmaterialbahn (43) bei einem Verpackungsmaterial-Überlappungsbereich (41) in Laufrichtung der Verpackungsmaterialbahn zusammenfügt,
eine stromab der Verpackungsmaterial-Führungseinrichtung (10) angeordnete Quer-Fügeeinrichtung (100), welche die geformte Verpackungsmaterialbahn (43) in vorgegebenen Abständen quer zur Laufrichtung zu einem Quer-Fügebereich (42) zusammenfügt, wobei die Quer-Fügeeinrichtung (100) zwei Fügemittel (110, 120) umfasst, von denen zumindest ein Fügemittel quer zur Laufrichtung bewegbar ist,
**gekennzeichnet durch**
eine Mehrzahl von quer zur Laufrichtung einzeln, im laufenden Verpackungsbetrieb bewegbare Prägemittel (112) und einen Prägemittel-Anschlagbereich, die derart zusammenwirken, dass mittels der Prägemittel (112) ertastbare Erhebungen in dem Quer-Fügebereich ausbildbar sind.

2. Verpackungsvorrichtung (1) für Kleinstückgüter nach Anspruch 1, **dadurch gekennzeichnet, dass** die Prägemittel (112) in einem der Fügemittel (110) ein- und ausfahrbar angeordnet sind und das andere Fügemittel (120) zumindest in einem Kontaktbereich eine elastisch ausgebildete Fügeoberfläche (121) oder eine Mehrzahl von quer zur Laufrichtung einzeln bewegbaren Prägemittelaufnahmen aufweist.

3. Verpackungsvorrichtung (1) für Kleinstückgüter nach Anspruch 1 oder 2, **dadurch gekennzeichnet,**
**dass** die Prägemittel (112) als zumindest eine 2*3-Matrix (117) aus Prägestiften ausgebildet sind, so dass mittels der Prägestifte pro Matrix ein ertastbares Punktmuster in Form eines Braille-Zeichens erzeugbar ist.

4. Verpackungsvorrichtung (1) für Kleinstückgüter nach einem der Ansprüche 1 - 3, **dadurch gekennzeichnet,**
**dass** zumindest eine Fügeoberfläche (111, 121) eines Fügemittels (110, 120) erhitzbar ist.

5. Verpackungsvorrichtung (1) für Kleinstückgüter nach einem der Ansprüche 1 - 4,
wobei die Verpackungsmaterial-Führungseinrichtung (10) eine zentrale Durchgangsöffnung (12) aufweist und derart ausgebildet ist, dass die längliche Verpackungsmaterialbahn (40) der Durchgangsöffnung (12) zugeführt wird, welche derart ausgeführt ist, dass die längliche Verpackungsmaterialbahn (40) in Laufrichtung zu einer von der Durchgangsöffnung (12) definierten schlauchförmigen Verpackungsmaterialbahn (43) mit einem Verpackungsmaterial-Überlappungsbereich (41) geformt wird,
wobei sich innerhalb eines Abschnittes der schlauchförmigen Verpackungsmaterialbahn (43) ein Führungsabschnitt (62) erstreckt,
**dadurch gekennzeichnet, dass** im unteren Bereich (63) des Führungsabschnittes (62) mehrere Spreizmittel (64) angeordnet sind, die die schlauchförmige Verpackungsmaterialbahn (43) zum Ausbilden eines Aufnahmebereichs (45) für Arzneimittelportionen und zum Vorbereiten des Zusammenfügens durch die Quer-Fügeeinrichtung (100) entsprechend der Ausrichtung der Fügemittel (110, 120) aufspreizen.

6. Verwendung einer Verpackungsvorrichtung (1) nach einem der Ansprüche 1 - 5 zum Herstellen eines mehrere Blisterbeutel umfassenden Blisterschlauches.

7. Verfahren zum Herstellen eines mehrere Blisterbeutel umfassenden Blisterschlauches, wobei
eine Verpackungsmaterialbahn (40) bereitgestellt wird,
die Verpackungsmaterialbahn (40) zur Aufnahme von Arzneimittelportionen zu einem Aufnahmebereich (45) geformt wird,
Kleinstückgüter dem Aufnahmebereich (45) zugeführt werden,
mit einer Längs-Fügeeinrichtung (20) die geformte Verpackungsmaterialbahn (43) bei einem Verpackungsmaterial-Überlappungsbereich (41) in Laufrichtung der Verpackungsmaterialbahn zu einer schlauchförmigen Verpackungsmaterialbahn (43) zusammengefügt wird, wobei das Zusammenfügen auch während oder vor der Zuführung der Kleinstückgüter stattfinden kann,
mittels einer Quer-Fügeeinrichtung (100) die schlauchförmige Verpackungsmaterialbahn (43) in vorgegebenen Abständen, bezogen auf die Laufrichtung, in einem Quer-Fügebereich (42) zusammengefügt wird,
**dadurch gekennzeichnet, dass** im Quer-Fügebereich (42) mittels einer Mehrzahl von quer zur Laufrichtung einzeln, im laufenden Herstellungsbetrieb der Blisterbeutel bewegbaren Prägemitteln (112) ein ertastbares Muster eingeprägt wird.

8. Verfahren zum Herstellen eines mehrere Blisterbeutel umfassenden Blisterschlauches nach Anspruch 7, **dadurch gekennzeichnet,**
**dass** die Prägemittel (112) als zumindest eine 2*3-Matrix (117) aus Prägestiften ausgebildet sind, so dass mittels der Prägestifte pro Matrix ein Punktmuster in Form eines Braille-Zeichens in dem Quer-Fügebereich eingeprägt wird.

9. Verfahren zum Herstellen eines mehrere Blisterbeutel umfassenden Blisterschlauches nach Anspruch 7 oder 8, **dadurch gekennzeichnet,**
**dass** die schlauchförmige Verpackungsmaterialbahn (43) vor dem Zusammenfügen mittels der Quer-Fügeeinrichtung (100) durch mehrere Spreizmittel (64) aufgespreizt wird.

## Claims

1. Packaging apparatus (1) for small piece goods, comprising:
a packaging material guiding device (10) for receiving an elongated packaging material web (40), wherein the packaging material guiding device (10) is designed such that the elongated packaging material web (40) is shaped in such a way that it is suitable for receiving small piece goods and continues in a direction of travel,
a longitudinal joining device (20) which is arranged downstream of the packaging material guiding device (10) and joins the shaped packaging material web (43) together at a packaging material overlap area (41) in the direction of travel of the packaging material web,
a transverse joining device (100) which is arranged downstream of the packaging material guiding device (10) and joins the shaped packaging material web (43) together at predetermined intervals transversely to the direction of travel to form a transverse joining area (42), wherein the transverse joining device (100) comprises two joining means (110, 120), from which at least one joining means is movable transversely to the direction of travel,
**characterized in that**
a plurality of embossing means (112) which can during ongoing packaging operation be individually moved transversely to the direction of travel and an embossing means stop area which cooperate in such a way that elevations which are palpable can be formed by means of the embossing means (112) in the transverse joining area.

2. Packaging apparatus (1) for small piece goods according to claim 1, **characterized in that** the embossing means (112) are arranged so that they can be extended and retracted in one of the joining means (110) and that the other joining means (120) has, at least in one contact area, an elastically designed joining surface (121) or a plurality of embossing means receptacles which are individually movable transversely to the direction of travel.

3. Packaging apparatus (1) for small piece goods according to claim 1 or 2, **characterized in that**
the embossing means (112) are designed as at least one 2*3 matrix (117) of embossing pins, so that a palpable dot pattern in the shape of a Braille character can be generated per matrix by means of the embossing pins.

4. Packaging apparatus (1) for small piece goods according to any of claims 1 to 3, **characterized in that**
at least one joining surface (111, 121) of a joining means (110, 120) can be heated.

5. Packaging apparatus (1) for small piece goods according to any of claims 1 to 4,
wherein the packaging material guiding device (10) has a central through opening (12) and is designed such that the elongated packaging material web (40) is fed to the through opening (12), which is realized such that the elongated packaging material web (40) is shaped in the direction of travel to a tubular packaging material web (43) defined by the through opening (12) and having a packaging material overlap area (41),
wherein a guide part (62) extends within a part of the tubular packaging material web (43),
**characterized in that**, in the lower area (63) of the guide part (62), a plurality of spreading means (64) are arranged, which spread open the tubular packaging material web (43) to form a receiving area (45) for medicament portions and to prepare the joining together by means of the transverse joining device (100) according to the alignment of the joining means (110, 120).

6. Use of a packaging apparatus (1) according to any of claims 1 to 5 for producing a blister tube comprising a plurality of blister bags.

7. Method for producing a blister tube comprising a plurality of blister bags, wherein
a packaging material web (40) is provided,
the packaging material web (40) is shaped into a receiving area (45) for receiving medicament portions,
small piece goods are fed to the receiving area (45),
by means of a longitudinal joining device (20), the shaped packaging material web (43) is joined together to form a tubular packaging material web (43) at a packaging material overlap area (41) in the direction of travel of the packaging material web, whereby the joining together can also take place during or before the feeding of the small piece goods,
by means of a transverse joining device (100), the tubular packaging material web (43) is joined together in a transverse joining area (42) at predetermined intervals, based on the direction of travel,
**characterized in that** a palpable pattern is embossed in the transverse joining area (42) by means of a plurality of embossing means (112) movable during ongoing production operation of the blister bags individually transversely to the direction of travel.

8. Method for producing a blister tube comprising a plurality of blister bags according to claim 7, **characterized in**
**that** the embossing means (112) are designed as at least one 2*3 matrix (117) of embossing pins, so that a dot pattern in the shape of a Braille character is embossed in the transverse joining area per matrix by means of the embossing pins.

9. Method for producing a blister tube comprising a plurality of blister bags according to claim 7 or 8,
**characterized in**
**that** the tubular packaging material web (43) is spread open by a plurality of spreading means (64) before being joined together by means of the transverse joining device (100).

## Revendications

1. Dispositif d'emballage (1) pour petits articles, comprenant :
un dispositif de guidage de matériau d'emballage (10) pour recevoir une bande de matériau d'emballage allongée (40), le dispositif de guidage de matériau d'emballage (10) étant conçu de telle sorte que la bande de matériau d'emballage allongée (40) est formée de telle sorte qu'elle convient pour recevoir des petits articles et qu'elle est avancée dans une direction de déplacement,
un dispositif d'assemblage longitudinal (20) disposé en aval du dispositif de guidage de matériau d'emballage (10), qui assemble la bande de matériau d'emballage (43) formée dans une zone de chevauchement de matériau d'emballage (41) dans la direction de déplacement de la bande de matériau d'emballage,
un dispositif d'assemblage transversal (100) disposé en aval du dispositif de guidage de matériau d'emballage (10), qui assemble la bande de matériau d'emballage (43) formée à des distances prédéfinies transversalement à la direction de déplacement pour former une zone d'assemblage transversale (42), le dispositif d'assemblage transversal (100) comprenant deux moyens d'assemblage (110, 120), dont au moins un moyen d'assemblage est mobile transversalement à la direction de déplacement,
**caractérisé par**
une pluralité de moyens d'estampage (112) mobiles individuellement transversalement à la direction de déplacement, en cours d'emballage, et une zone de butée des moyens d'estampage, qui coopèrent de telle sorte que des élévations palpables peuvent être formées dans la zone d'assemblage transversal au moyen des moyens d'estampage (112).

2. Dispositif d'emballage (1) pour petits articles selon la revendication 1, **caractérisé en ce que** les moyens d'estampage (112) sont disposés de manière à pouvoir être rentrés et sortis dans l'un des moyens d'assemblage (110) et **en ce que** l'autre moyen d'assemblage (120) présente, au moins dans une zone de contact, une surface d'assemblage (121) de conception élastique ou une pluralité de logements de moyens d'estampage mobiles individuellement transversalement à la direction de déplacement.

3. Dispositif d'emballage (1) pour petits articles selon la revendication 1 ou 2, **caractérisé en ce que**
les moyens d'estampage (112) sont réalisés sous la forme d'au moins une matrice 2*3 (117) de broches d'estampage, de sorte qu'un motif de points palpable sous la forme d'un signe braille peut être généré au moyen des broches d'estampage par matrice.

4. Dispositif d'emballage (1) pour petits articles selon l'une des revendications 1 à 3, **caractérisé en ce que**
au moins une surface d'assemblage (111, 121) d'un moyen d'assemblage (110, 120) peut être chauffée.

5. Dispositif d'emballage (1) pour petits articles selon l'une des revendications 1 à 4,
dans lequel le dispositif de guidage de matériau d'emballage (10) comprend une ouverture de passage centrale (12) et est conçu de telle sorte que la bande de matériau d'emballage allongée (40) est amenée à l'ouverture de passage (12), qui est conçue de telle sorte que la bande de matériau d'emballage allongée (40) est formée dans la direction de déplacement en une bande de matériau d'emballage (43) tubulaire définie par l'ouverture de passage (12) avec une zone de chevauchement de matériau d'emballage (41),
une section de guidage (62) s'étendant à l'intérieur d'une section de la bande de matériau d'emballage (43) tubulaire,
**caractérisé en ce que** dans la zone inférieure (63) de la section de guidage (62) sont disposés plusieurs moyens d'écartement (64) qui écartent la bande de matériau d'emballage (43) tubulaire pour former une zone de réception (45) pour des portions de médicament et pour préparer l'assemblage par le dispositif d'assemblage transversal (100) selon l'orientation des moyens d'assemblage (110, 120).

6. Utilisation d'un dispositif d'emballage (1) selon l'une des revendications 1 à 5 pour la fabrication d'un tube blister comprenant plusieurs sachets blister.

7. Procédé de fabrication d'un tube blister comprenant plusieurs sachets blister, dans lequel
une bande de matériau d'emballage (40) est mise à disposition,
la bande de matériau d'emballage (40) est formée en une zone de réception (45) pour recevoir des portions de médicaments,
des petits articles sont amenées à la zone de réception (45),
à l'aide d'un dispositif d'assemblage longitudinal (20), la bande de matériau d'emballage (43) formée est assemblée dans une zone de chevauchement de matériau d'emballage (41) dans la direction de déplacement de la bande de matériau d'emballage pour former une bande de matériau d'emballage (43) tubulaire, l'assemblage pouvant également avoir lieu pendant ou avant l'amenée des petits articles,
au moyen d'un dispositif d'assemblage transversal (100), la bande de matériau d'emballage (43) tubulaire est assemblée dans une zone d'assemblage transversale (42) à des intervalles prédéfinis par rapport au direction de déplacement,
**caractérisé en ce que**, dans la zone d'assemblage transversale (42), un motif palpable est imprimé à l'aide d'une pluralité de moyens d'estampage (112) mobiles individuellement transversalement à la direction de déplacement, en cours de fabrication des sachets blister.

8. Procédé de fabrication d'un tube blister comprenant plusieurs sachets blisters selon la revendication 7,
**caractérisé en ce que**
les moyens d'estampage (112) sont réalisés sous la forme d'au moins une matrice 2*3 (117) de broches d'estampage, de sorte qu'un motif de points sous la forme d'un signe braille est estampé dans la zone d'assemblage transversale au moyen des broches d'estampage par matrice.

9. Procédé de fabrication d'un tube blister comprenant plusieurs sachets blisters selon la revendication 7 ou 8,
**caractérisé en ce que**
la bande de matériau d'emballage (43) tubulaire est écartée par plusieurs moyens d'écartement (64) avant l'assemblage au moyen du dispositif d'assemblage transversal (100) .
